# EUROPEAN PATENT APPLICATION

(11) **EP 4 508 963 A1**
(43) Date of publication of application: **19.02.2025**
(21) Application number: 24195190.4
(22) Date of filing: 19.08.2024
(51) Int. Cl.: A01C 7/20, A01B 63/10

(54) **GROUND FORCE SYSTEM FOR MULTIPLE ZONES OF AN AGRICULTURAL IMPLEMENT**

(30) Priority: 17.08.2023 US 202363533294 P
(71) Applicant: Macdon Industries Ltd., Winnipeg, Manitoba R3J 3S3 (CA)
(72) Inventor: Flick, Daniel, Gooding, 83330 (US); Hundt, Karl Bernard, Lake Mills, 53551 (US)
(74) Representative: Jostarndt Patentanwalts-AG

(57) **Abstract**

An agricultural implement is provided having a toolbar and a plurality of row units mounted along the toolbar for working rows of ground. Each of the row units comprises one or more working devices for working the ground and an actuator for varying a ground force applied by the row unit to the ground. The improvement comprises a control system which controls the actuators for multiple the row units so as to define a zone ground force system where first and second groups of the row units define first and second zones. The first group of row units in the first zone are operated together under a first down pressure to generate a first ground force to work a first plurality of rows in a field. The second group of row units in the second zone are operated together under a second down pressure to generate a second ground pressure greater than the first ground pressure to work a second plurality of rows of ground which are harder than the first plurality of rows.

## Description

### FIELD OF THE INVENTION

The invention relates to a control system for an agricultural implement, and preferably, to a zone ground force system for controlling ground forces in row units of such an implement.

### BACKGROUND OF THE INVENTION

Row crop farming necessitates the use of implements such as cultivators that utilize a row unit configuration having individual row units for working individual inter-row spaces or inter-rows between crop rows. Cultivator technology is generally known, wherein cultivators are often used to cultivate soil between rows of crops such as for weeding of an agricultural field. The cultivator may include a lateral toolbar and a selected number of row units, which typically include cutting devices that work the soil between rows in a manner that helps eliminate weeds. Known cultivators of this type are mounted behind a tractor.

Each row unit is responsible for an action specific to a row (or between two crop rows), and there are generally a plurality of row units mounted to a toolbar, all performing the same task of working a row of ground between crop rows. Due to differences in ground conditions, the row units typically allow for some adjustment of the performance of the row unit when working such ground.

A common row unit features a "ground force" (down or up force) actuator, responsible for controlling the ground force with which the row unit is contacting or working the ground. Ground force is an important variable, and is often a key adjustment in row unit performance. Performance may be measured in terms of consistent depth between row units, gauge wheel force, seeding depth, performance in mud, etc. It is desirable to adjust ground force from the tractor cab, on-the-go. Currently this is either accomplished by use of a closed loop feedback system to automatically adjust pressure, or by open-loop control from inside the cab. Existing open loop control systems typically provide the same ground force to each row unit.

For both open loop and closed loop control, all of the row units may be adjusted together, which creates a problem, especially when certain rows are harder or have a greater compactness due to the travel of farm implements. Typically, this occurs as the tires or tracks of an implement or its tractor move along a track over the ground, wherein these inter-row spaces may be referenced herein as tire-track rows or more generally as hardened or compacted rows. This scenario is usually created by prior field treatments that create different soil condition patterns throughout the field (for example tire-track rows) These tire-track rows are the inter-row spaces between crop rows over which the tractor tires or tracks travel. As such, the rows in these harder ground areas require a distinctly different ground force applied by the row units to achieve performance that is comparable to other rows between the crop rows where the ground is softer or less compacted. Further, the soil condition patterns may vary not only in dependence upon the travel of tires/tracks along the tire-track rows but also the frequency over which this ground has been travelled. While these variations often result from the implement or its tractor, the compaction or hardness could also result from other causes.

Further, it has been a persistent problem that tire-track rows exhibit different soil conditions in comparison to soil conditions in other areas of the field, and there has been some desire for the tire-track rows to be subjected to more down pressure than other rows being worked. While all of the row units can be adjusted together using a single PRRV or PRR (pressure reducing/relieving) valve to increase or decrease the down force, a single PRRV or PRR valve does not provide a solution for this problem without creating unique row unit geometry. Other known hydraulic ground force systems may have a PRRV or PRR valve on each cylinder of a row unit, which allows each row unit to be adjusted but this adds significant cost and complexity. It is believed the additional cost/complexity would not be justified for a cultivator and other similar implements although other types of implements such as a planter might justify the additional cost. As such, these conventional systems have drawbacks wherein such conventional systems typically would either have an actuator control per row unit or have one control pressure applied across all row units.

Therefore, a need exists for an improved implement control system which addresses the disadvantages associated with known systems. In particular, it is an object of the invention to provide a cultivator that incorporates further improvements over known cultivator technology.

### SUMMARY OF THE INVENTION

The invention relates to an improved farm implement preferably configured as a cultivator that incorporates an inventive control system that creates a "zone" ground force system where the operator may operate a controller that adjusts ground force within a zone independently of other zones. A "zone" is comprised of two or more row units that may or may not be directly adjacent to each other. While this control system may set the ground force the same for all row units if desired, more preferably, the control system is actuated to differ the pressure in the zones in scenarios where ground hardness patterns (such as tire tracks) repeatably cause certain row units to require more (or less) ground force than other row units. The zone ground force system is comprised of hydraulic or pneumatic actuators and two or more pressure control valves. Each pressure control valve is used to control the ground force of the row units within its' respective zone. As such, the operator has the ability to adjust each pressure control valve at will and thereby adjust the ground force imparted by the row units in that zone.

The improved control system is cost effective in that it offers performance advantages similar to a row-by-row ground force system while retaining many of the cost benefits of a toolbar-wide system since it requires minimal additional hardware to implement the control system.

In comparison to known control systems, the inventive control system provides improved performance. Unlike many toolbar-wide systems, this system allows the user to configure zones and adjust the ground force in each zone to their liking. This results in significantly more ability to fine-tune ground force to field conditions.

In another aspect, the control system has flexible configurability, wherein the control system allows for simple user configuration of zones, thus adapting to a wide variety of operations and farming practices. The zones also can be readily reconfigured to vary the number and location of row units associated with each zone, and each zone can comprise multiple zone sections separated from each other by row units assigned to other zones. As such, one zone can comprise the row units that work the spaced apart tire-track rows, while another zone can comprise the remaining row units between and outside of the tire-track rows.

In a further aspect, the control system may also be modified in another configuration for increased automation. For example, it may be desirable to include sensors for one or more row unit(s) within each zone in order to create closed loop control to optimize ground force (or other parameters such as depth) for each zone of the row units.

The improved system provides more efficient configuration of a farm implement or other machine for any ground-working operation while keeping costs at a minimum. This inventive control system provides significant advantages over known cultivators in that it is adjustable from in the cab, while addressing ground force concerns in tire-track rows. This design is also very applicable to other row crop implements such as strip till toolbars and seeders, which typically do not provide a cost justification for individual row control in comparison to other machines such as row crop planters that might provide a cost-justification for individual row control.

The control system provides or controls hydraulic pressure at two or more, different zone pressure levels, wherein each pressure level may be preset to a constant zone pressure or more preferably, be variable to adjust the zone pressure level for that ground force being applied to a respective zone. These two zone pressure levels are referenced as standard down pressure and secondary down pressure and can be supplied through respective standard and secondary pressure lines, wherein an operator can optionally route both pressure lines to an actuator or just one or the other pressure line, which provides significant flexibility. As such, the inventive control system is designed so that the user or operator can swap hydraulic pressure lines and quickly on the order of a few minutes reconfigure the system for their operation's needs. To reconfigure the row down force zones, the hydraulic lines for each respective zone can be readily reconfigured or moved to control a particular actuator or hydraulic cylinder with one or another zone pressure level. Further, each actuator may optionally include a bypass feature so that a pressure line for one zone can operate the actuator and a pressure line for another zone can bypass that actuator.

In more detail, the control system includes zone control valves, which each control a hydraulic feed line operated at a respective pressure. In a two-zone system, the pressure can be supplied at either a standard pressure or standard down pressure for operating a first zone of row units using the standard down pressure, and a secondary pressure or secondary down pressure for operating a second zone of row units using the secondary down pressure. For reference purposes, the secondary down pressure typically is greater than the standard down pressure, wherein the standard down pressure would operate the row units that are working ground having a first ground pattern that might be softer than a second, harder ground pattern over which the farm implements have previously traversed. More particularly, the second ground pattern may be tire-track rows over which a tire or track of an implement travels so that the tire-track rows are harder or more compacted. For example, the tire-track row may have resulted from the passage of tractor tires during ground-working operations. As such, the tire-track rows are more compacted and require a greater secondary ground pressure applied by the row units to overcome the hardness or compactness of the ground.

In another aspect, respective first and second feed lines supply the standard down pressure and secondary down pressure to respective first and second zones of row units, wherein the row units in the first zone work the standard rows of ground and the row units of the second zone work the tire-track rows. The row units can be assigned to one zone or the other by simply choosing whether a row unit will be operated by the standard down pressure or the secondary down pressure. It will be appreciated that more than two zones can be configured with this inventive control system.

As referenced above, the system is readily reconfigurable. Each actuator of a row unit that controls the ground force is provided with a control unit that includes supply ports for routing pressure lines to the actuator for controlling the actuator. The control unit may also be provided with a bypass feature such as a bypass fitting, which interconnects upstream and downstream pressure lines for bypassing that actuator. The supply ports for a particular actuator would be connected to pressure lines supplying either of the standard pressure and secondary pressure while the bypass fitting would be connected to the other of the standard and secondary down pressure. As such, that actuator would either operate under the standard pressure or secondary pressure and be included in one of the zones while the other of the standard pressure or secondary pressure bypasses that actuator to other actuators in a different zone.

As noted, the bypass feature can be optionally added to a control unit to reduce hardware costs, and may not be required on all of the control valves for all of the actuators. For example, once the last row unit working a tire-track row is fed with the secondary down pressure, there may be no need to continue routing secondary down pressure to the remaining row units on the end of the toolbar.

As can be seen, the pressure lines for the standard and secondary down pressures can be readily switched so that an actuator of a row unit can be switched or reassigned to another zone simply by reconfiguring the connections of the pressure lines to the supply ports and the bypass ports.

When reconfiguring the system, the control system including the pressure lines, control valves, and actuators for each row unit are depressurized. As noted, the operator has the option of connecting or assigning each row unit to either a first zone or a second zone (or more zones) depending upon whether a pressure supply line is connected to the supply ports on the actuator control unit to thereby control the actuator, or to the bypass fitting, so that the pressure line bypasses that particular actuator and continues downstream to the next adjacent row unit.

According to one aspect of the invention, an agricultural implement is provided having a toolbar and a plurality of row units mounted along the toolbar for working rows of ground. Each of the row units comprises one or more working devices for working the ground and an actuator for varying a ground force applied by the row unit to the ground. The improvement comprises a control system which controls the actuators for multiple the row units so as to define a zone ground force system where first and second groups of the row units define first and second zones. The first group of row units in the first zone are operated together under a first down pressure to generate a first ground force to work a first plurality of rows in a field. The second group of row units in the second zone are operated together under a second down pressure to generate a second ground pressure greater than the first ground pressure to work a second plurality of rows of ground which are harder than the first plurality of rows.

According to another aspect of the invention, an agricultural implement is provided comprising a toolbar, a first zone control unit, a second zone control unit, and a plurality of row units. The first zone control unit is configured to supply a first down pressure to a first line. The second zone control unit is configured to supply a second down pressure to a second line, where the second down pressure is greater than the first down pressure. The plurality of row units is mounted along the toolbar for working rows of ground. Each row unit comprises one or more working devices for working the ground, an actuator and an actuator control unit. The actuator is configured to vary a ground force applied by the row unit to the ground. The actuator control unit has a supply port configured to route pressure lines to control the actuator and a bypass feature configured to bypass the actuator. The first line is connected to the supply ports of the actuators in a first group of the plurality of row units and the second line is connected to the supply ports of the actuators in a second group of plurality of row units.

Other objects and purposes of the invention, and variations thereof, will be apparent upon reading the following specification and inspecting the accompanying drawings.

### BRIEF DESCRIPTION OF THE DRAWINGS

Figure 1 is a front perspective view of an agricultural implement configured as a cultivator according to the present invention having a toolbar and multiple row units.
Figure 2 is a front elevation view thereof.
Figure 3 is a representative schematic diagram of zone control devices, actuators and their control units, and pressure lines in a pressure control system.
Figure 4 is an enlarged perspective view of the tool bar showing hydraulic devices and actuators for a plurality of row units of a toolbar.
Figure 5 is an enlarged perspective view of the hydraulic lines connected to a first actuator.
Figure 6 is an enlarged perspective view of the control system of Figure 5.
Figure 7 is an enlarged perspective view of the hydraulic lines connected to a second actuator.
Figure 8 is an enlarged perspective view of the control system of Figure 7.

Certain terminology will be used in the following description for convenience and reference only, and will not be limiting. For example, the words "upwardly", "downwardly", "rightwardly" and "leftwardly" will refer to directions in the drawings to which reference is made. The words "inwardly" and "outwardly" will refer to directions toward and away from, respectively, the geometric center of the arrangement and designated parts thereof. Said terminology will include the words specifically mentioned, derivatives thereof, and words of similar import.

### DETAILED DESCRIPTION

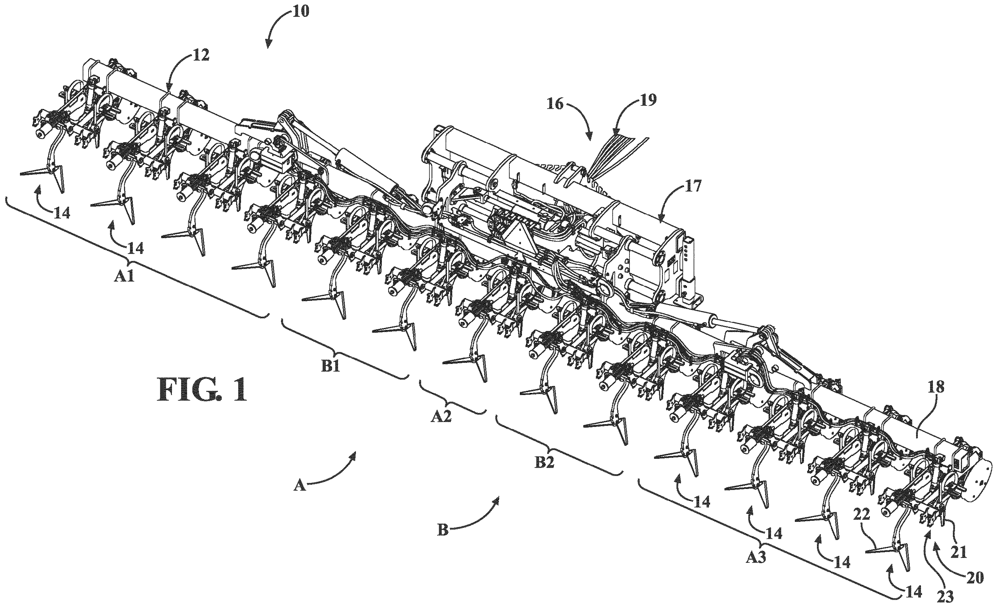

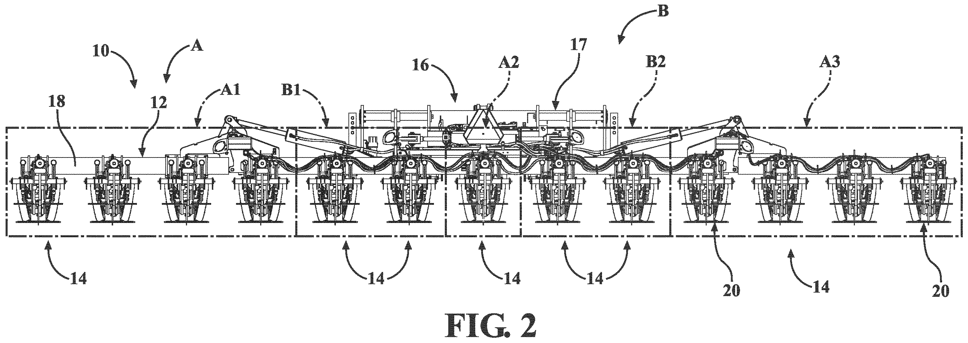

Figure 1 is a front perspective view of an agricultural implement 10 configured as a cultivator according to the present invention. Figure 2 is a front elevational view of such implement 10. The implement 10 is configured with a toolbar 12 having multiple row units 14 mounted thereon, wherein each row unit 14 is configured to work ground during agricultural operations. Where the implement 10 is configured as a cultivator, the row units 14 would work the inter-row spaces or inter-rows between crop rows as the implement 10 is transported by a tractor.

The implement 10 is improved to permit farmers and the like to work ground in fields that may exhibit variable patterns of ground conditions resulting from prior farming operations. For example, some of these ground patterns may be created by the tires or tracks of a tractor moving over the ground as it transports a cultivator or other implement 10 along the crop rows. The inter-rows between crop rows are worked by the row units 14 as the tractor tires travel along some of the inter-rows, which are also referenced herein as tire-track rows to differentiate these compacted or hardened inter-rows from other standard inter-rows. These tire-track rows may be harder or have a greater compactness due to the travel of these farm implements 10 as the tractor tires or tracks move between the crop rows.

Generally, the improved implement 10 is configured to increase the ground force of the row units 14 that work the tire-track rows to compensate for the increased hardness. Preferably, the implement 10 is configured to operate two or more groups of row units 14 so that each group of row units 14 defines a respective ground zone in which the row units 14 in that zone apply a respective ground force when working the rows between the crop rows. A plurality and preferably two or more zones A and B (Figure 2) of row units 14 are provided, wherein each zone A or B can be controlled to provide different or the same ground forces to the inter-row spaces or inter-rows being worked by row units 14.

As an example, a conventional tractor would have sets of tires or tracks on opposite sides thereof, where a first set of tires or tracks on one side travel along one or more first tire-track rows and a second set of the tires or tracks on the other side of the tractor travel along one or more second tire-track rows. In some cases, the wheels may be provided in pairs, such as two spaced-apart wheels at the front right corner of a tractor would travel along two adjacent tire-track rows, wherein a crop row may pass between the pair of tires. Depending upon the tractor design, there may be one or more tire-track rows adjacent to each other for each side of the tractor, and depending upon the width of the tractor and spacing of the tires, there may be one or more crop rows and inter-rows between the tire-track rows created by the tractor. The present invention is readily reconfigurable to handle the potential differences in the numbers and spacing of the tire-track rows in a particular field. As will be understood, these differences can generate different ground patterns.

To accommodate the variations in the ground patterns and arrangement of tire-track rows, the implement 10 includes an inventive control system 16 that creates a "zone" ground force system where the operator may actuate the control system 16 to adjust the ground force within a zone independently of other zones. A "zone" is comprised of two or more row units 14 that may or may not be directly adjacent to each other. In the example shown in Figures 1 and 2, zones A and B are shown, wherein zone A comprises zone sections A1, A2 and A3 and zone B comprises zone sections B1 and B2, which are shown with diagrammatic boxes about each zone section in Figure 2. First as to zone B, each zone section B1 and B2 comprises two row units 14, wherein each zone section B1 or B2 would work two respective tire-track rows in the field. Due to the tractor geometry, zone sections B1 and B2 are separated by zone section A2, which only comprises one row unit 14 that would work a single inter-row in the field. The zone sections B1 and B2 correspond to the tire-track rows that are being traversed by the tractor tires or tracks during field treatments.

The control system 16 thereby controls the row units 14 in the zone sections B1 and B2 together so that the ground force generated by each of the row units 14 in zone B is the same. The control system 16 also operates the remaining row units 14 assigned to zone sections A1, A2 and A3 with a different and typically lower ground force so that the inter-rows in zone A are worked at a first ground force and the harder tire-track rows in zone B are worked at a higher, second ground force to compensate for the increased hardness or compaction in the tire-track rows. As will be described further herein, the particular row units 14 assigned to zones A and B can be varied depending upon the specific ground patterns of a field, and additional zones with different ground forces can also be configured without departing from the scope of the present invention.

In more detail, the implement 10 includes the toolbar 12 having a plurality of row units 14 provided in laterally spaced relation on the respective toolbar 12 to work the soil or ground in the inter-row spaces or inter-rows between crop rows. This implement 10 is particularly suitable for cultivating between rows of standing crops by engagement of the row units 14 with the ground, wherein each row unit operates with a respective ground force. While this description references crop rows and inter-row spaces for reference, the invention may be practiced in the absence of crops and standing crop rows such that these terms provide reference for the mechanical spacing of the row units 14 along the toolbar 12.

The toolbar 10 may be releasably attached to a 3-point hitch of a towing vehicle such as a tractor by a main mounting assembly 17. The main mounting assembly 17 may be configured in a conventional 3-point hitch arrangement. The main mounting assembly 17 supports a main beam 18 that forms the toolbar 12, wherein the main beam 18 essentially is supported in a horizontal, transverse orientation when the implement 10 is mounted to a tractor. Suitable hydraulic pressure lines 19 also are provided on the main mounting assembly 17, which supply pressure fluid for operating various pressure cylinders on the implement 10. The pressure lines 19 are fed and controlled by a fluid supply received from the tractor. In other configurations, the implement 10 might be towed by the tractor, and the invention is not limited by whether the implement 10 is towed or not.

Next, as noted above, the toolbar 12 includes a plurality of laterally spaced row units 14 that are fixedly attached to the toolbar 12 along the length thereof. The row units 14 may be formed the same as each other such that the following description is directed to a representative row unit 14, although row units are commonly used in different configurations. In the illustrated embodiment of Figures 1 and 2, thirteen row units 14 are provided although more or less may be provided on a toolbar 12. As a common feature, the row units 14 work the ground with a respective ground force during agricultural operations.

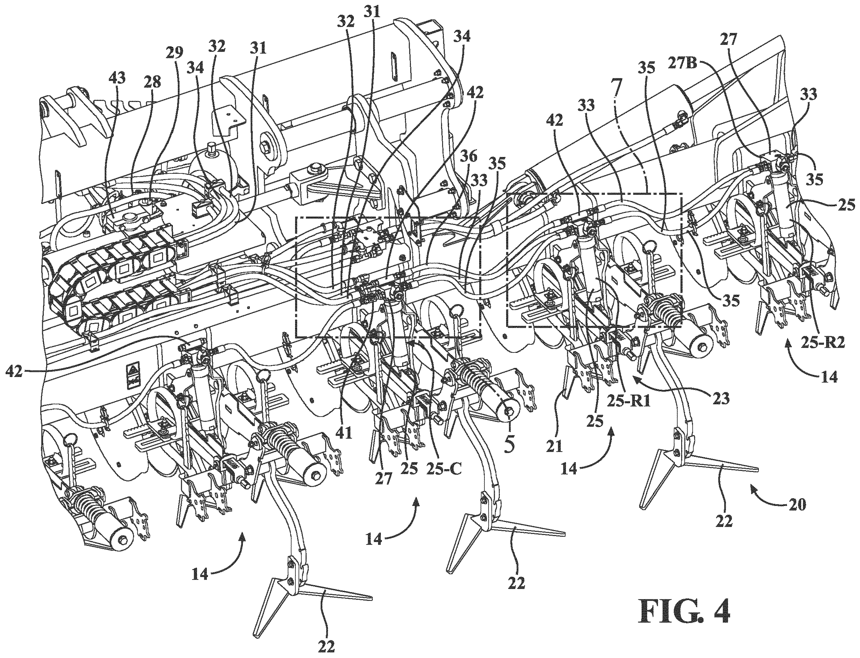

Typically, the representative row unit 14 is mounted on the toolbar 12 by suitable clamps or other mounting structures, and each row unit 14 preferably comprises one or more cutting devices 20, such as ground-engaging leading and trailing cutting devices 21 and 22 (Figures 1 and 4). Generally, when the implement 10 is configured as a cultivator, the cutting devices 20 may be formed as sweeps or blades that cut into the ground and effect cultivation of the spaces or inter-rows between the crop rows. This helps resist or prevent weed growth even when standing crops are being cultivated.

The cutting device 20 may be mounted on a support linkage 23 that permits independent, vertical movement of the one or more cutting devices 20 relative to the toolbar 12 as well as the other row units 14. As seen in Figure 4, each row unit 14 also includes an actuator 25, which preferably is formed as a pressure cylinder that has a drive end driving the support linkage 23 to vary the ground force with which the one or more cutting devices 20 work the ground. By controlling the actuator 25, the ground force can be controlled.

The actuator 25 can be operated to adjust the down force on cutting devices 20 of the row unit 14. The actuator 25 may also be operated to lift the row unit 14 when operating in areas that might be partially cultivated or might otherwise require lifting of the row unit 14. Each actuator 25 is configured so that it is assigned to one of the zones described above, so that the actuators 25 in a respective zone A or B are operated together as a group to generate a desired ground force for each of the row units in that zone A or B. The ground force for each zone A and B could be set the same by the control system 16 and its operator, or more preferably, zone B has a greater ground force than zone A to better work the tire-track rows.

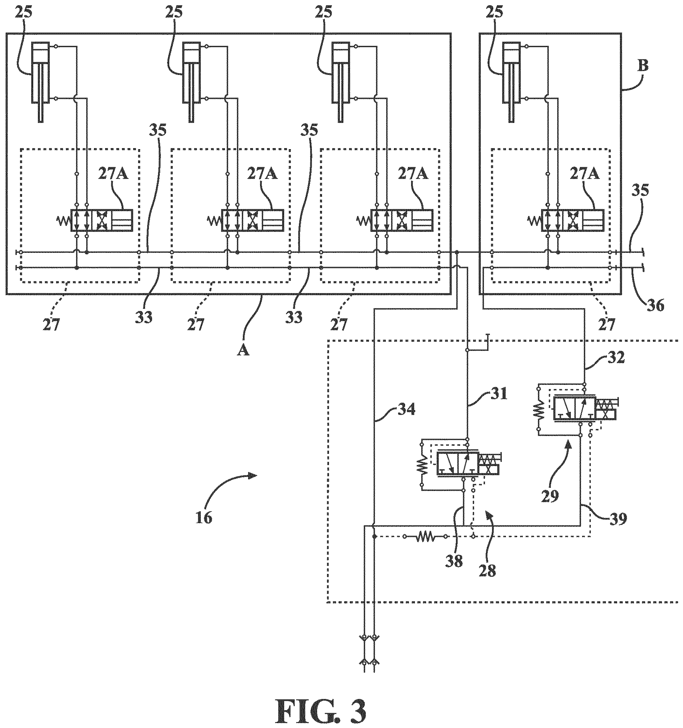

Turning next to Figure 3, the actuators 25 for a plurality of row units 14 are shown in combination with the control system 16. For diagrammatic purposes, the complete system is not shown in Figure 3 and instead, a single actuator 25 is shown for zone B, which may be assigned to either of zone sections B1 or B2. Similarly for reference purposes, a quantity of three actuators 25 are shown in zone A, which may be actuators 25 assigned as a group to either of zone sections A1 or A3. One of the illustrated actuators 25 may also represent the single actuator of zone section A2 operating with actuators from the other zone sections A1 and A3.

The control system 16 further comprises a respective actuator control unit 27 for each actuator 25, wherein the actuator control units 27 are connected to first and second zone control unit 28 and 29. The zone control units 28 and 29 are adjustable independent of each other and operable to control zones A and B respectively. Since the actuators 25 are formed as hydraulic pressure cylinders, the actuator control units 27 and zone control units 28 and 29 are formed as hydraulic control valves of the type diagrammatically shown in Figure 3. The control units 27, 28 and 29 and actuators 25 are interconnected together by pressurized fluid supply lines or hoses 31, 32 and 33 and/or fluid return lines or hoses 34 and 35. Downstream supply line 36 and return line 35 are also shown in Figure 3 to indicate that additional downstream actuators 25 may be connected to zone B. Preferably, the zone control valves 28 and 29 are PRR valves or pressure reducing/relieving valves.

As illustrated in Figure 3, the zone control units 28 and 29 receive pressurized hydraulic fluid from the tractor or other suitable pressure supply through upstream feed lines 38 and 39, which feed lines 38 and 39 may be fed through the feed lines 19 shown in Figure 1. Typically, the zone control units 28 and 29 would receive a common working pressure and then regulate the downstream pressure supplied to supply lines 31 and 32. The zone control units 28 and 29 may be controlled automatically by the control system 16, which may include a master controller, or through manual input of the operator in the tractor cab to thereby vary the pressure supplied through supply lines 31 and 32. In typical operation, the pressure in pressure supply line 31 for zone A would be set at a standard down pressure to thereby govern the down pressure or ground pressure generated in the row units 14 of zone A. Further, the pressure in pressure supply line 32 for zone B would be set at a secondary down pressure to thereby govern the down pressure or ground pressure generated in the row units 14 of zone B and thereby increase the down force as needed to work the tire-track rows.

The individual actuator control units 27 are connected in series so as to receive the controlled pressures either directly from the zone control units 28 and 29 through pressure lines 31 and 32, or from an upstream actuator control unit 27 through supply lines 33. The down pressure can also be used for lifting of the row unit 14 through use of a control valve 27A in the control unit 27, which is a basic two position directional control valve.

With this inventive control system 16, the zone A and zone B pressure lines 31 and 32 can be configured so as to operate the actuators 25 for separate groups of the row units 14. In a typical configuration as seen in Figures 1 and 2, the A pressure supply line 31 can supply standard down pressure to all of the row units 14 in zone A, in this case, the nine row units 14 assigned to zone sections A1, A2 and A3. Similarly, the B pressure supply line 32 can supply secondary down pressure to the four row units assigned to zone sections B1 and B2. Notably, the standard down pressure or secondary down pressure can be adjusted and set independent of each other through operation of the respective zone control valves 28 and 29. As such, the inventive control system 16 allows the user to configure the number and location pattern of zones and zone sections and to adjust the ground force in each zone to their liking. This results in significantly more ability to fine-tune ground force to disparate field conditions.

Further, the control system 16 has substantial reconfigurability, wherein the control system 16 allows for simple user configuration of zones, thus adapting to a wide variety of operations and farming practices. The zones also can be readily reconfigured to vary the number and location of row units 14 associated with each zone.

In a further aspect, the control system may also be modified in another configuration for increased automation. For example, it may be desirable to include sensors for one or more row unit(s) 14 within each zone A, B, etc. in order to create closed loop control to optimize ground force (or other parameters such as depth) for each zone of the row units 14.

Further, the improved system provides more efficient configuration of a farm implement or other machine for any ground-working operation while keeping costs at a minimum. This inventive control system 16 provides significant advantages over known cultivators in that it is adjustable from in the cab, while addressing tire-track row ground force concerns. This design is also very applicable to other row crop implements such as strip till toolbars and seeders, which typically do not provide a cost justification for adding individual row control, wherein each row unit 14 is set independent of each other row unit 14.

Referring next to Figures 4-8, the inventive control system 16 is designed so that the user or operator can swap hydraulic pressure lines, and in a few minutes, reconfigure the system for their operation's needs. In this regard, each actuator 25 may also include a bypass option so that two pressure lines 33 and 36 may optionally be routed to downstream actuators 25 to supply both the standard down pressure and the secondary down pressure to the downstream actuators 25. Where two pressure lines 33 and 36 are routed to a downstream actuator 25, an operator has the option at that row unit 14 to either connect its actuator 25 to the standard down pressure or the secondary down pressure, with the non-selected pressure being passed downstream using the bypass option as will be discussed further below.

To reconfigure the row down force zones, the pressure lines 31, 32 and 33 for each respective zone A or B can be readily reconfigured or moved to control a particular actuator or hydraulic cylinder 25 or else bypass the actuator or pressure cylinder 25. The control system 16 thereby provides or controls hydraulic pressure at two or more, different pressure levels i.e., the standard down pressure or the secondary down pressure, wherein each pressure level preferably is variable to adjust the pressure level for that particular pressure level being applied to a respective zone A or B.

Referring in more detail to Figure 4, the control system 16 further comprises a central flow control device 41 to split pressure flow between the left and right sides of the toolbar 12, and bypass fittings 42, which optionally can be added to one or more of the actuator control units 27 to selectively route the standard and secondary down pressures to the various actuators assigned to the different zones. The bypass fittings 42 thereby define a bypass feature that may optionally be provided in any of the actuator control units 27 depending upon the zone configurations.

The central flow control device 41 is typically provided on the central most row unit 14 and may be formed as a single manifold or may comprise individual T fittings for connection to each of the upstream supply lines comprising the pressurized fluid supply lines 31 and 32 and the fluid return line 34. In the illustrated configuration, the zone control valves 28 and 29 may be formed as an assembly with a zone control manifold 43 (Figure 4), which in turn connects to an upstream end of the pressurized supply lines 31 and 32 and the return line 34. The opposite downstream ends of the supply lines 31 and 32 and the return line 34 in turn connect to the central flow control device 41 that splits the fluid flow to supply downstream pressure lines 33 and 36 so that the standard and secondary down pressures can be supplied to any zone A and B row units 14 on the left end of the toolbar 12 and any zone A or B row units 14 on the opposite, right end of the toolbar 12. The central flow control device 41 also combines the return flows from return lines 35, which continues through return line 34 (Figure 3).

As seen on Figure 4, the right side of the central flow control device 41 has downstream supply and return connections with the control unit 27 of the central actuator 25 and another downstream supply connection with the bypass device 42, which may be supported on the control unit 27. The central actuator 25 is referenced as 25-C in Figures 4-6. Additional supply lines 33 and 36 and return line 35 may be connected to the central flow control device 41 so as to continue downstream in the leftward direction for connection to additional actuators 25. Since both the standard pressure supply line 33 and the secondary down pressure line 36 may continue in this leftward direction, any of the actuators 25 in this leftward region can be connected to either of the standard or secondary down pressures and thereby be assigned to zones A or B as desired.

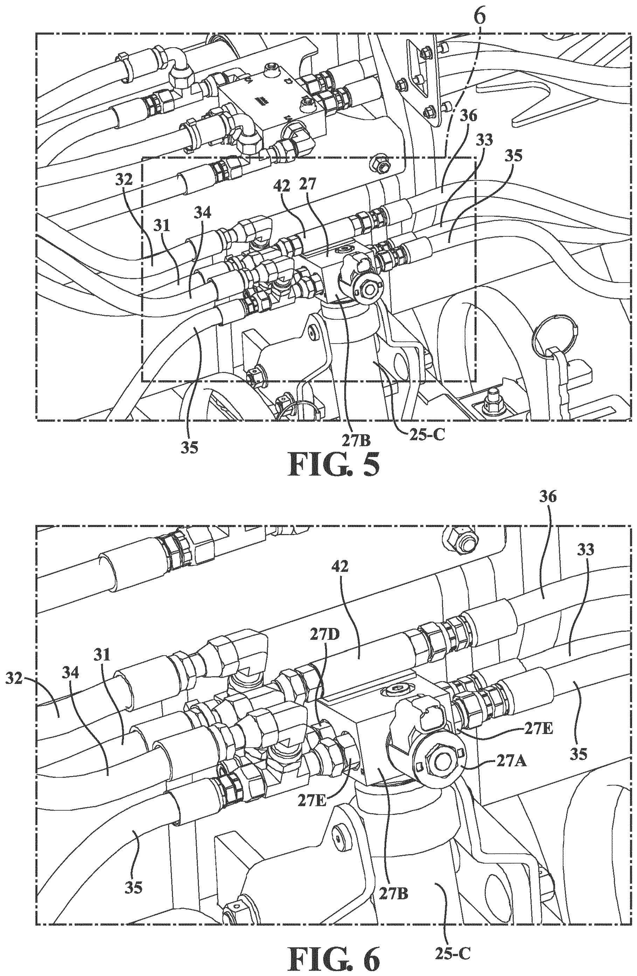

In more detail, the actuator control unit 27 of the central actuator 25-C connects to return lines 35 on both sides of the control unit 27, which is also true for the remaining actuators 25. As seen in Figure 6, each actuator control unit 27 may be configured with the fluid control valve 27A mounted on a manifold 27B, wherein the manifold 27B includes pressure and tank ports 27D and 27E on its first and second sides (or in other words, the upstream and downstream sides) for connection to any of the supply lines 33 and 36 or return line 35. As illustrated, the hydraulic feed line 31 at the standard down pressure feeds into tank port 27D.

The manifold 27B may also support a bypass fitting 42 thereon as part of the control unit 27. As illustrated, the hydraulic feed line 32 at the secondary down pressure feeds into the bypass fitting 42, wherein an additional downstream pressure line 36 is connected to the bypass fitting 42. As such, the secondary down pressure bypasses the actuator 25-C, while the standard down pressure operates the actuator 25-C. As such, the actuator 25-C is assigned to zone A in this configuration.

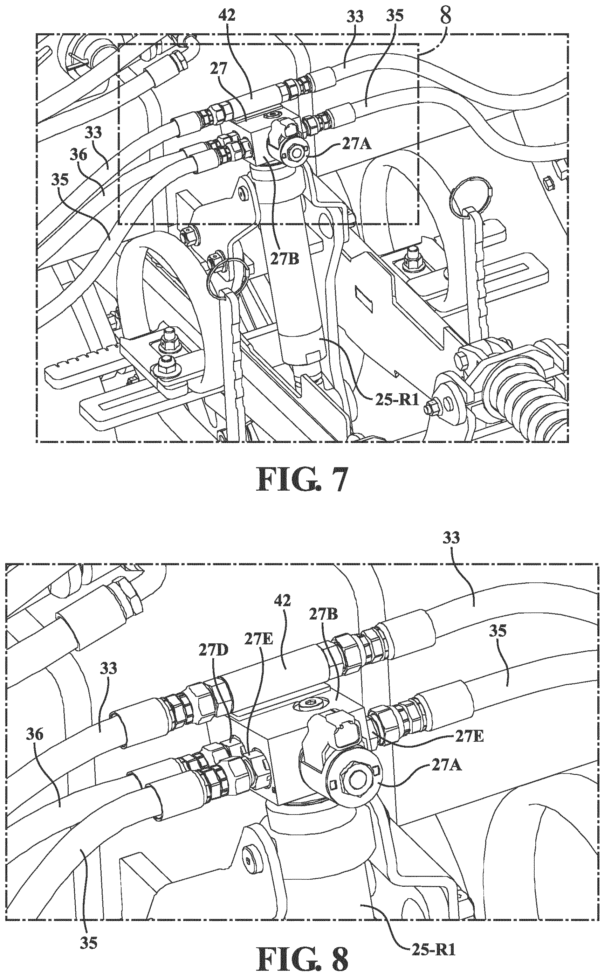

Further, as best seen in Figure 4, downstream pressure supply lines 33 and 36 are routed downstream to the next adjacent actuator 25 (referenced as actuator 25-R1 in Figures 4, 7 and 8). During assembly, the ends of the supply lines 33 and 36 are loose and may be connected to the actuator 25-R1 or the bypass fitting 42 or vice versa. As illustrated, the pressure line 36 is connected to the control unit 27 and the pressure line 33 is connected to the bypass fitting 42. As described further below, this allows an operator to assign the actuator 25-R1 to either zone B as shown in Figures 7 and 8 or else to zone A if the connections of the pressure lines 33 and 36 to the bypass unit 42 and control unit manifold 27B are switched.

Referring next to Figures 7 and 8, the next adjacent actuator 25-R1 is assigned to zone B as illustrated although it can optionally be connected to either of zones A or B depending upon the pressure line connections. As illustrated, actuator 25-R1 is assigned to zone B by connecting the upstream secondary down pressure line 36 to inlet port 27D. As such, the actuator 25-R1 and its row unit 14 operate according to the secondary down pressure for working a respective tire-track row. In this instance, the standard down pressure line 33 is connected to the bypass fitting on the upstream side along with another downstream pressure line 33.

It will be noted that in Figures 7 and 8, the three pressure lines 33, 36 and 35 are connected to the upstream side of the actuator 25-R1, and only two pressure lines 33 and 35 are connected on the downstream side thereof. If multiple row units 14 are located downstream from actuator 25-R1 and these were assigned to both zones A and B, then three pressure lines 33, 36 and 35 can continue to be routed to next adjacent actuators 25 in a manner similar to Figures 5 and 6. However, Figures 7 and 8 illustrate a configuration wherein the downstream row units 14 are only assigned to zone A. In this instance, the operator may elect to only route one standard down pressure line 33 along with the return line 35 (Figure 8) to feed the adjacent actuator 25-R2 (see Figure 4), which necessarily would be assigned to zone A. Where the pressure line 33 has been connected to the bypass fitting 42 as shown in Figure 8, the downstream pressure port 27D on the control unit manifold 27B would be capped or plugged. In turn the pressure lines 33 and 35 are connected directly to the control unit manifold 27B of actuator 25-R2 as illustrated in Figure 4, and then additional downstream pressure lines 33 and 35 would continue rightwardly to feed the next successive actuator(s) 25 of the endmost row units 14 such as those row units 14 in zone section A3 of Figure 2. The downstream manifold ports 27D and 27E on the last or endmost actuator 25 on the toolbar 12 would simply be capped. Notably, all of these downstream actuators 25 would only be assigned to zone A. If the operator wished to preserve the option of assigning the end row units 14 to either zones A or B, the additional pressure line 36 could continue to be routed to downstream row units 14 using the bypass fittings as desired.

It will be understood that the bypass feature is optional. In this regard, Figure 4 illustrates the bypass fitting 42 added to the control unit 27 of actuator 25-R1, while the bypass fitting 42 is omitted from control unit 27 of actuator 25-R2. This helps reduce costs by omitting parts, while providing flexibility since the parts can be added later during reconfiguration of the zones.

In operation, the zone control valves 28 and 29 each control a hydraulic feed line 31 and 32 that are pressurized at a respective standard down pressure or secondary down pressure. In a two-zone system, such as zones A and B, the pressure can be supplied at either the standard down pressure for operating the first group of row units 14 of zone A using the standard down pressure to set the ground force used to work most inter-rows, or else at the secondary down pressure for operating the second group of row units 14 in zone B using the secondary down pressure to set the ground force used in tire-track rows. For reference purposes, the secondary down pressure typically is greater than the standard down pressure, wherein the standard down pressure would operate the row units 14 that are working ground having a first ground pattern that might be softer than a second ground pattern over which farm implements have traversed. More particularly, the second ground pattern may be harder or more compacted tire-track rows over which a tire or track of an implement travels. For example, the tire-track row may have resulted from the passage of tractor tires during ground-working operations. As such, the tire-track rows are more compacted and may require a greater secondary ground pressure applied by the row units 14 in zone B to overcome the hardness or compactness of the ground.

As described, the respective first and second feed lines 31 and 32 can supply the standard pressure and secondary pressure to respective first and second zones A and B of row units 14, wherein the row units 14 in the first zone A work the standard rows of ground and the row units 14 of the second zone B work the tire-track rows. This feature by itself provides significant advantages as described herein.

As a further advantage, the control system 16 is readily reconfigurable. Each actuator 25 of a row unit 14 is provided with its actuator control unit 27 that can be supplied by one or the other of the standard and secondary down pressure lines 33 and 36 as described above so that the actuator 25 can be assigned to either zone A or B. Any control unit 27 may also include the bypass fitting or feature 42 so that both of the pressure supply lines 33 and 36 can be routed to each actuator 25 and the operator can elect to connect one or the other to that actuator 25 with the other bypassing the actuator 25. As such, the pressure lines 33 and 36 for the standard and secondary down pressures can be readily switched or reassigned so that an actuator 25 of a row unit 14 can be switched to another zone simply by reconfiguring the connections of the pressure lines 33 and 36 to the upstream supply port 27D and the bypass fitting 42 on the control unit 14.

When reconfiguring the system, the control system 16 including the pressure lines 31-36, control units 27, 28 and 29, and actuators 25 for each row unit 14 are depressurized. As noted, the operator has the option of connecting each row unit 14 to either a first zone A or a second zone B depending upon what pressure supply lines 33 or 36 are connected to the actuator control unit 27 or to the bypass fitting 42. If one or more additional zones are provided, this could be accomplished by adding an additional zone control unit, respective pressure lines and bypass fittings 42 as needed.

Although particular preferred embodiments of the invention have been disclosed in detail for illustrative purposes, it will be recognized that variations or modifications of the disclosed apparatus, including the rearrangement of parts, lie within the scope of the present invention.

## Claims

1. In an agricultural implement having a toolbar and a plurality of row units mounted along the toolbar for working rows of ground, each of the row units comprising one or more working devices for working the ground and an actuator for varying a ground force applied by the row unit to the ground, the improvement comprising a control system which controls the actuators for multiple row units so as to define a zone ground force system wherein first and second groups of the row units define first and second zones wherein the first group of row units in the first zone are operated together under a first down pressure to generate a first ground force to work a first plurality of rows in a field, and the second group of row units in the second zone are operated together under a second down pressure to generate a second ground pressure greater than the first ground pressure to work a second plurality of rows of ground which are harder than the first plurality of rows.

2. The implement according to Claim 1, wherein the control system comprises first and second zone control units operable by an operator to actuate the actuators of the row units and adjust one of the first and second ground forces independently of the other of the first and second ground forces to thereby adjust the ground forces applied in the first and second zones.

3. An agricultural implement comprising:
a toolbar;
a first zone control unit configured to supply a first down pressure to a first line;
a second zone control unit configured to supply a second down pressure to a second line, wherein the second down pressure is greater than the first down pressure; and
a plurality of row units mounted along the toolbar for working rows of ground, wherein each row unit comprises:
one or more working devices for working the ground;
an actuator configured to vary a ground force applied by the row unit to the ground; and
an actuator control unit having a supply port configured to route pressure lines to control the actuator and a bypass feature configured to bypass the actuator;
wherein the first line is connected to the supply ports of the actuators in a first group of the plurality of row units and the second line is connected to the supply ports of the actuators in a second group of the plurality of row units.

4. The implement according to Claim 3, wherein the first line is connected to the bypass features of the actuators in the second group of row units.

5. The implement according to Claim 4, wherein the second line is connected to the bypass features of the actuators in the first group of row units.

6. The implement according to Claim 5, wherein the first zone control unit includes a first pressure control valve configured to adjust the first down pressure.

7. The implement according to Claim 6, wherein the second zone control unit includes a second pressure control valve configured to adjust the second down pressure.
